# EUROPÄISCHE PATENTANMELDUNG

(11) **EP 2 482 130 A1**
(43) Veröffentlichungstag der Anmeldung: **01.08.2012**
(21) Anmeldenummer: 12000177.1
(22) Anmeldetag: 13.01.2012
(51) Int. Cl.: G03B 21/58, B66F 11/04, A63J 25/00

(54) **Flexibles Zugsystem für Bildwandsysteme und Verfahren zur Montage von Bildwandsystemen**

(30) Priorität: 27.01.2011 DE 102011009579
(71) Anmelder: DDC Design & Development GmbH & Co. KG, 33175 Bad Lippspringe (DE)
(72) Erfinder: Czeczka, Andreas, 33100 Paderborn (DE)
(74) Vertreter: Schober, Mirko

(57) **Zusammenfassung**

Ein flexibles Zugsystem (2, 3) für Bildwandsysteme umfasst eine Haltevorrichtung (3) mit einem Haltemittel (3a) und ein flexibles Tragmittel (2). Die Haltevorrichtung (3) weist mindestens einen Montagepunkt für die Montage an mindestens einem Bestandteil eines Bildwandsystems, insbesondere an einem Montageelement (7) oder Deckeneinbaurahmen (6) oder Bildwandgehäuse (4) auf.

## Beschreibung

Die Erfindung betrifft ein flexibles Zugsystem für Bildwandsysteme nach dem Oberbegriff des Anspruchs 1 und ein Verfahren zur Montage von Bildwandsystemen nach Anspruch 5.

Nach dem Stand der Technik werden stationäre Bildwandsysteme auch bei einer Breite von unter 300cm mit mindestens zwei Personen montiert, wobei jeweils eine Person das Bildwandsystem links und rechts anheben muss, um das Bildwandsystem in Montageposition zu bringen. Bei Bildwandsystemen unter 300cm Breite dienen als Montagehilfsmittel üblicherweise Leitern oder in seltenen Fällen Steiger. Größere Bildwandsysteme werden überwiegend mit vor Ort zu installierenden Hebezeugen wie Kränen, Aufzügen oder Hebebühnen installiert, da sowohl das Gewicht des Bildwandsystems als auch die hierfür erforderliche Deckenhöhe eine rein manuelle Installation nicht mehr zulassen. Auch Seilzüge werden als Hebezeug bei der Installation einer großen Bildwand mit zumeist mehr als 300cm Breite verwendet, wobei der Seilzug vor Ort an der Decke angebracht und nach der Montage des Bildwandsystems wieder entfernt werden muss.

Aufgabe der Erfindung ist deshalb, ein flexibles Zugsystem für Bildwandsysteme verfügbar zu machen, mit dem kleinere Bildwandsysteme bis etwa 5m Breite und etwa 50kg Gewicht von nur einer Person an einer Wand oder an der Decke montiert werden können, ohne externe Montagehilfsmittel, die nicht am Bildwandsystem verbleiben können, heranziehen zu müssen. Ferner ist es Aufgabe der Erfindung, das flexible Zugsystem modular aufzubauen, um auch bestehende Bildwandsysteme nachrüsten zu können. Darüber hinaus ist es Aufgabe der Erfindung, ein Verfahren zu entwickeln, durch das die Montage eines kleineren Bildwandsystems bis etwa 5m Breite und etwa 50kg durch nur eine Person möglich wird.

Gelöst wird diese Aufgabe durch ein flexibles Zugsystem gemäß des Oberbegriffs von Anspruch 1 durch die Merkmale des kennzeichnenden Teils des Anspruchs 1 und durch ein Verfahren zur Montage von Bildwandsystemen nach Anspruch 5.

Anspruch 1 sieht ein flexibles Zugsystem für Bildwandsysteme vor, das eine Haltevorrichtung mit einem Haltemittel und ein flexibles Tragmittel umfasst, wobei die Haltevorrichtung mindestens einen Montagepunkt für die Montage an mindestens einem Bestandteil eines Bildwandsystems, insbesondere an einem Montageelement oder Deckeneinbaurahmen oder Bildwandgehäuse, aufweist.

Das flexible Zugsystem nach Anspruch 1 ermöglicht eine einfache Montage eines Bildwandsystems nur durch eine Person. Insbesondere das schwere Bildwandgehäuse mit der darin untergebrachten Leinwand kann von einem Monteur wechselseitig an jeweils einem Ende angehoben werden, bis die endgültige Montageposition erreicht ist. Aufgrund seines modularen Aufbaus kann das flexible Zugsystem auch bei bestehenden Bildwandsystemen nachgerüstet werden. Außerdem ermöglicht der modulare Aufbau die Montage des flexiblen Zugsystems an verschiedenen Bestandteilen des Bildwandsystems. Nachdem der Deckeneinbaurahmen oder das Bildwandgehäuse die Montageposition erreicht hat, kann das flexible Tragmittel einfach oberhalb oder jeweils seitlich des Bildwandgehäuses oder des Deckeneinbaurahmens verstaut werden, insbesondere ist keine Demontage des flexiblen Zugsystems erforderlich. Allerdings eröffnet der modulare Aufbau des flexiblen Zugsystems auch die Möglichkeit einer Mehrfachverwendung. So kann zunächst der Deckeneinbaurahmen mit Montageelementen bis unter die Rohdecke oder die Zwischendecke an den Deckenträger oder den Wand-Decken-Abstandshalter mit Gewindestangen herangeführt werden. Wenn der Deckeneinbaurahmen an den Gewindestangen fixiert ist, können die flexiblen Zugsysteme anschließend gegebenenfalls vom Deckeneinbaurahmen an das Bildwandgehäuse umgesetzt werden oder es werden weitere flexible Zugsysteme verwendet. Grundsätzlich kann das flexible Tragmittel am Deckeneinbaurahmen und/oder am Bildwandgehäuse verbleiben.

Vorteilhafte Ausgestaltungen und Weiterbildungen des flexiblen Zugsystems ergeben sich aus den Unteransprüchen 2 bis 4.

Demnach ist vorteilhaft, dass die Haltevorrichtung des flexiblen Zugsystems als Haltemittel eine Klemme oder Öse und vorzugsweise eine Führung aufweist und dass die Haltevorrichtung an einem Bestandteil eines Bildwandsystems, also an einem Montageelement, an einem Deckeneinbaurahmen oder an einem Bildwandgehäuse angeordnet ist.

Ein bereits vormontiertes flexibles Zugsystem hat den Vorteil, dass die Montage der jeweiligen Bestandteile des Bildwandsystems an Ort und Stelle effizienter erfolgen kann. Grundsätzlich können sich dabei jeweils die Haltevorrichtungen von Deckeneinbaurahmen und Bildwandgehäuse die flexiblen Tragmittel teilen, da sie nacheinander hochgezogen werden. Klemmen oder Ösen sind einfache aber effiziente Haltemittel für die flexiblen Tragmittel. Die Führung hält das zuvor eingeführte flexible Tragmittel stets in der Nähe des Haltemittels, so dass das flexible Tragmittel schnell in das Haltemittel gebracht werden kann.

Vorteilhaft ist auch, dass das flexible Zugsystem als Seil-, Riemen oder Kettenzugsystem ausgeführt ist, welches als flexibles Tragmittel ein Seil, einen Riemen oder eine Kette, insbesondere eine Kugelkette oder eine Ringkette aufweist.

Seile, Riemen, Ringketten oder Kugelketten sind gut geeignete flexible Tragmittel. Insbesondere ist ein Seil, ein Riemen oder eine Kugelkette für den Einsatzzweck nicht zu schwer. Außerdem kann ein Seil oder eine Kugelkette nach Gebrauch beispielsweise zusammengerollt und anschließend für Revisionszwecke am Deckeneinbaurahmen bzw. am Bildwandgehäuse verstaut werden.

Außerdem ist es vorteilhaft, dass das flexible Zugsystem einen Flaschenzug und/oder einen Antriebsmotor aufweist. Die Verwendung von Flaschenzügen im Zusammenhang mit den flexiblen Zugsystemen ermöglicht gegebenenfalls auch die Montage von größeren Bildwandsystemen mit schwereren Bestandteilen, wie insbesondere des Bildwandgehäuses, das in der Regel bereits die Bildwand und gegebenenfalls ein Scherengelenk enthält. Mit Flaschenzügen und/oder Antriebsmotoren können insbesondere auch Bildwände über 300cm Breite und über 50kg Gewicht montiert werden.

Anspruch 5 sieht ein Verfahren zur Montage von Bildwandsystemen mit Hilfe von mehreren flexiblen Zugsystemen mit den folgenden Schritten vor:
A. flexible Tragmittel, insbesondere Seile, Riemen oder Ketten, werden für die rechte und linke Seite jeweils am Wand- Deckenträger oder am Deckenträger oder an einem Bildwandmontagebügel befestigt,
B. Haltevorrichtungen werden jeweils rechts und links an einem Deckeneinbaurahmen oder einem Deckeinbaugehäuse befestigt, wobei die Befestigung an einem Deckeneinbaurahmen auch an Montageelementen, die auf dem Deckeneinbaurahmen aufgesetzt sind, erfolgen kann,
C. der Deckeneinbaurahmen bzw. das Bildwandgehäuse werden rechts und links wechselseitig oder gegebenenfalls auch gleichzeitig an den flexiblen Tragmitteln abhängig von der Höhe und der Größe des Monteurs hochgezogen bzw. geschoben und anschließend an den Haltevorrichtungen arretiert,
D. der Schritt C. wird so lange wiederholt bis der Deckeneinbaurahmen bzw. das Bildwandgehäuse in seine endgültige Montageposition gelangt ist.

Durch das erfindungsgemäße Verfahren nach Anspruch 5 kann eine einzige Person ein Bildwandsystem bis zu einer Größe der Bildwand von etwa 3m Breite und einem Gewicht von bis zu ungefähr 50kg ohne Mitwirkung einer weiteren Person oder von externen Hilfsmitteln allein ordnungsgemäß unter der Decke montieren, ohne dabei vorgegebene Maximalbelastungen zu überschreiten oder Sicherheitsvorschriften zu verletzen.

Vorteilhafte Ausgestaltungen und Weiterbildungen des Verfahrens zur Montage von Bildwandsystemen ergeben sich aus den Unteransprüchen 6 und 7.

Es kann vorgesehen sein, dass einer oder mehrere der folgenden weiteren Schritte vorgesehen ist bzw. sind:
E. Zwischen den Schritten B. und C.: Die flexiblen Tragmittel, insbesondere die Seile oder die Ketten, werden rechts bzw. links durch die Führungen der Haltevorrichtungen gezogen,
F. nach Schritt D.: Einrasten des Deckeneinbaurahmens bzw. des Bildwandgehäuses an Haltevorrichtungen des Wand-Deckenträgers bzw. des Bildwandgehäuses,
G. Befestigen des Deckeneinbaurahmens bzw. des Bildwandgehäuses,
H. Aufnehmen der flexiblen Tragmittel und Unterbringen der flexiblen Tragmittel oberhalb oder seitlich rechts und links des Deckeneinbaurahmens oder des Bildwandgehäuses.

Durch die weiteren Verfahrensschritte kann der zu montierende Bestandteil des Bildwandsystems in einem Zug vollständig arretiert und befestigt werden. Gleichzeitig kann dabei auch das flexible Tragmittel verstaut werden, falls es nicht mehr für eine nachfolgende Montage eines weiteren Bestandteils des Bildwandsystems benötigt wird. Die Führungen halten die flexiblen Tragmittel stets in der Nähe der Haltevorrichtungen. Für Revisionszwecke stehen die Haltevorrichtungen somit zur Verfügung.

Es kann ferner vorgesehen sein, dass die Haltevorrichtungen jeweils Klemmen oder Ösen, eine Führung und mindestens einen Montagepunkt für die Montage an mindestens einem Bestandteil eines Bildwandsystems aufweisen.

Durch den Montagepunkt können die Haltevorrichtungen des flexiblen Zugsystems modular an verschiedenen Bestandteilen des Bildwandsystems nach- bzw. während der Montage umgerüstet werden.

Weitere Eigenschaften, Merkmale und Vorteile der Erfindung werden nachfolgend anhand von Figuren von bevorzugten Ausführungsformen des flexiblen Zugsystems nach Anspruch 1 und des Verfahrens zur Montage von Bildwänden nach Anspruch 5 näher erläutert. Im Einzelnen zeigen
- Figur 1 -: das flexible Zugsystem nach einer ersten Ausführungsform der Erfindung in einer schematischen perspektivischen Detail-Darstellung,
- Figur 2 -: das flexible Zugsystem nach einer ersten Ausführungsform der Erfindung in einer schematischen perspektivischen Darstellung,
- Figur 3 -: das flexible Zugsystem nach einer ersten Ausführungsform der Erfindung mit teilweise angehobenem Bildwandgehäuse in einer schematischen perspektivischen Darstellung,
- Figur 4 -: das flexible Zugsystem nach einer ersten Ausführungsform der Erfindung nach der Montage eines Bildwandgehäuses in einer schematischen perspektivischen Darstellung,
- Figur 5 -: das flexible Zugsystem nach einer zweiten Ausführungsform der Erfindung in einer schematischen perspektivischen Darstellung,
- Figur 6 -: das flexible Zugsystem nach einer zweiten Ausführungsform der Erfindung mit teilweise angehobenem Deckeneinbaurahmen in einer schematischen perspektivischen Darstellung,
- Figur 7 -: das flexible Zugsystem nach einer dritten Ausführungsform der Erfindung in einer schematischen perspektivischen Detail-Darstellung,
- Figur 8 -: das flexible Zugsystem nach einer dritten Ausführungsform der Erfindung in einer schematischen perspektivischen Darstellung,
- Figur 9 -: das flexible Zugsystem nach einer dritten Ausführungsform der Erfindung mit teilweise angehobenem Bildwandgehäuse in einer schematischen perspektivischen Darstellung,
- Figur 10 -: das flexible Zugsystem nach einer dritten Ausführungsform der Erfindung mit einer weiteren Haltevorrichtung aus der zweiten Ausführungsform in einer schematischen perspektivischen Darstellung.

Anhand der ausführlichen Beschreibung zu den Figuren werden Ausführungsformen der Erfindung beschrieben, die alle ein Seil 2 als flexibles Tragmittel 2 aufweisen, das grundsätzlich auch durch einen Riemen 2 oder eine Kette 2, wie beispielweise ein Gurtband, eine Kugelkette oder eine Ringkette, oder andere flexible Tragmittel ersetzt werden kann. Für einige Kettentypen wird bei nicht dargestellten Ausführungsformen entsprechend die Klemme 3a der Haltevorrichtung 3 beispielsweise durch eine Öse ersetzt. Der Begriff Bildwandgehäuse bezieht sich auf eine konfektionierte Bildwand nach DIN 19045. Nach DIN 19045 umfasst der Begriff "konfektionierte Bildwand" neben der Bildwand, die Hilfseinrichtungen der Bildwand.

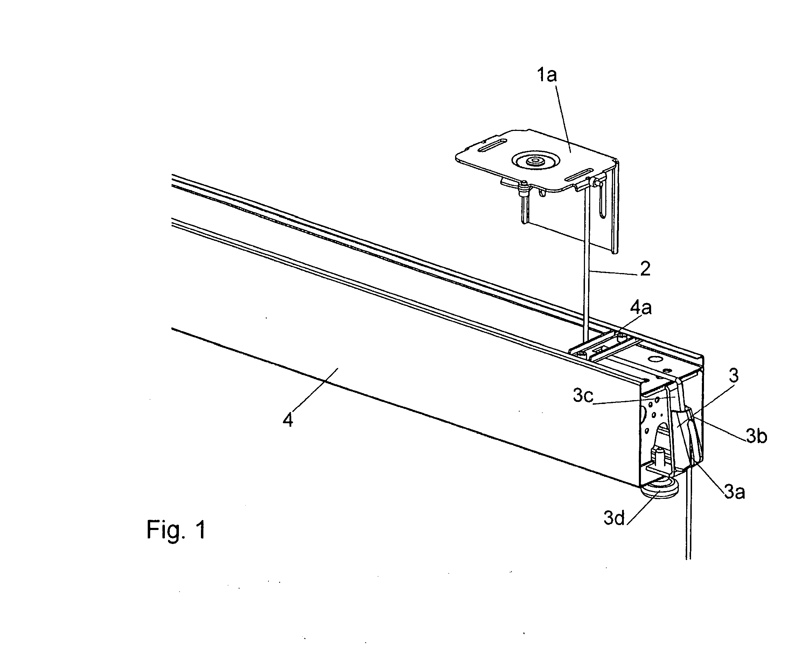

Figur 1 zeigt das flexible Zugsystem nach einer ersten Ausführungsform der Erfindung als Seilzugsystem, um ein Bildwandgehäuse 4 mit Hilfe von Seilzügen 2, 3 an einen Wand-Deckenträger 1a anzuheben. Zunächst wird das Seil 2 am Wand-Deckenträger 1a befestigt. Anschließend werden die Haltevorrichtungen 3 an den Seiten eines Bildwandgehäuses 4 montiert, wenn das Bildwandgehäuse 4 nicht schon entsprechend vorkonfiguriert ausgeliefert wurde. In Figur 1 ist nur eine der für die Montage des Bildwandsystems mit flexiblen Zugsystemen erforderlichen Haltevorrichtungen 3 dargestellt. Die Haltevorrichtungen 3 setzen sich jeweils aus einer auf einem Montagebügel 3c angeordneten Klemme 3a als Haltemittel und einer Führung 3b zusammen, wobei der Montagebügel 3c jeweils vorzugsweise mehrere Montagepunkte aufweist, an denen die Haltvorrichtung 3 mit Befestigungsmitteln 3d arretiert werden kann. Das Bildwandgehäuse 4 weist für die Seilführung in der Regel auch eine Umlenkschiene 4a auf, die auf dem Bildwandgehäuse 4 verschiebbar angeordnet und arretierbar ist.

Das Seil 2 wird üblicherweise unter der Umlenkschiene 4a durchgeführt, wobei die Kante der Umlenkschiene 4a vorteilhafterweise so eingestellt wird, dass das Seil 2 im Abschnitt zwischen Wand-Deckenträger 1a und Umlenkschiene 4a senkrecht verläuft. Wenn die Umlenkschiene 4a richtig eingestellt ist, wird diese am Bildwandgehäuse 4 arretiert, wobei hierfür neben den dargestellten Schrauben als Befestigungsmittel auch Federn in Frage kommen.

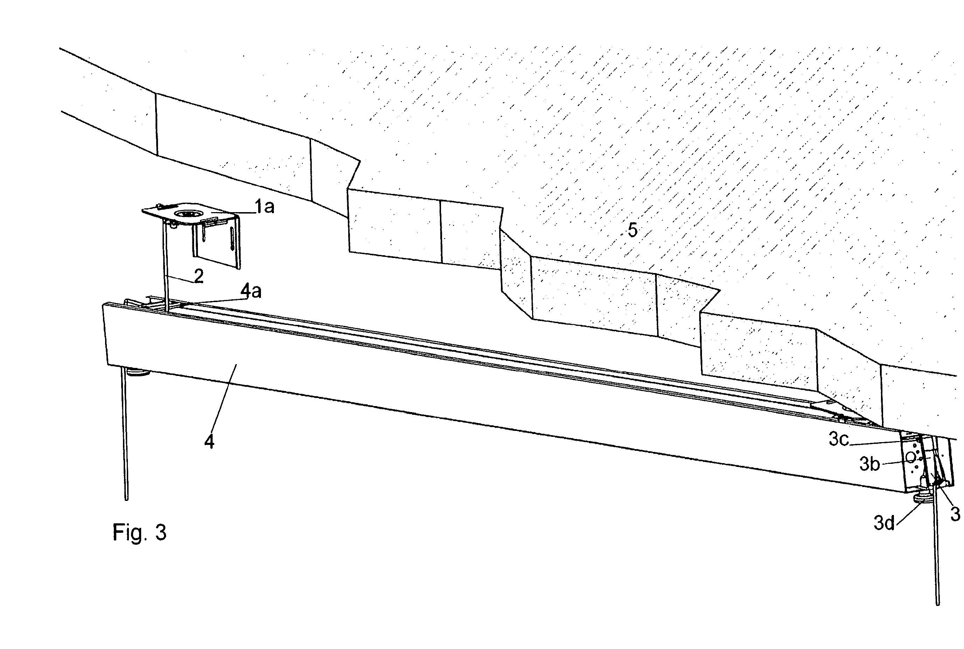

Im Anschluss an die Umlenkschiene 4a wird das Seil 2 durch die Führung 3b der Haltevorrichtung 3 durchgezogen und in die Klemme 3a gedrückt, wobei man das Gewicht des Bildwandgehäuses 4 ausnutzen kann. Dieser Vorgang wird für die nicht dargestellte Seite wiederholt. Das Bildwandgehäuse 4 kann nun, wie es in Figur 3 dargestellt ist, auf einer Seite angehoben und wieder in der Klemme 3a befestigt werden. Im Anschluss daran wird die andere Seite angehoben. Dieser Vorgang kann abwechselnd in hinreichend kleinen Schritten wiederholt werden, bis das Bildwandgehäuse 4 vollständig unmittelbar unter den Wand-Deckenträgern 1a angeordnet ist und damit an den Wand-Decken-trägern 1a fixiert werden kann. Es kann auch ein Einrasten des Bildwandgehäuses an den Wand-Deckenträgern und daran anschließendes Arretieren mit Schrauben vorgesehen sein.

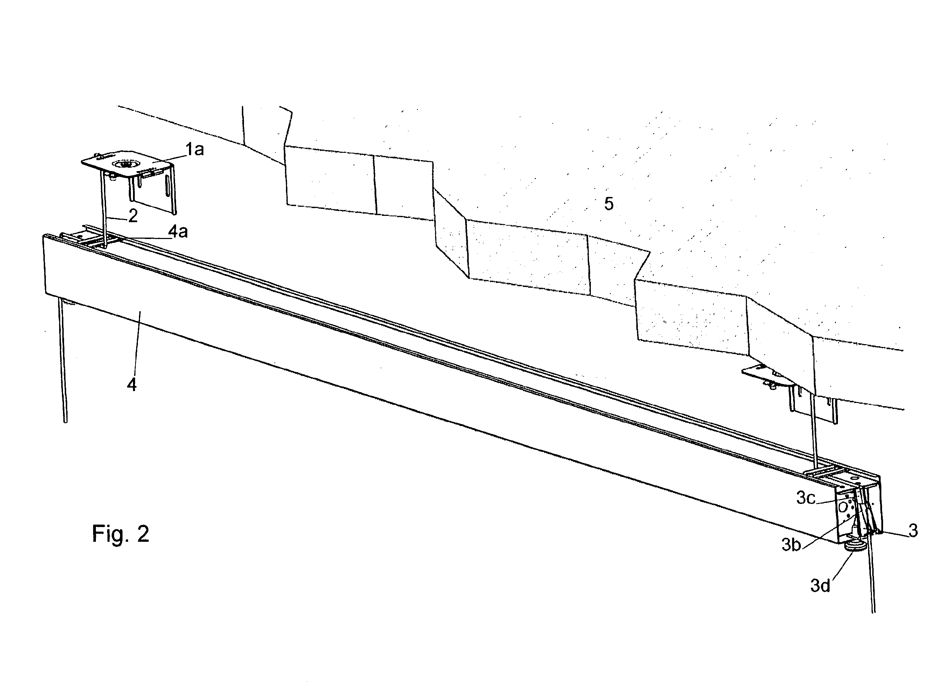

Figur 2 zeigt eine vollständige Darstellung der ersten Ausführungsform der Erfindung, wobei beide Seilzüge 2, 3 zu erkennen sind. Zusätzlich ist die Decke 5 dargestellt, wobei die Decke 5 lediglich aus Gründen des besseren Überblicks gebrochen dargestellt ist. Gleiche Bezugszeichen bezeichnen die gleichen Teile wie in Figur 1.

Figur 3 zeigt einen Schritt des wechselseitigen Anhebens bzw. Hochschiebens des Bildwandgehäuses 4 an den Seilen 2, wobei gerade das rechte Seil 2 an der Haltevorrichtung 3 fixiert wurde, um nun die linke Seite des Bildwandgehäuses 4 anheben zu können. Konkret dargestellt ist in Figur 3 der offensichtlich vorletzte Schritt des wechselseitigen Anhebens des Bildwandgehäuses 4. Nach einem weiteren Anheben der linken Seite wird das Bildwandgehäuse 4 seine endgültige Montageposition erreicht haben und kann an den beiden Wand-Deckenträgern 1a mit Befestigungsmitteln, wie beispielsweise Schrauben, befestigt werden. Es kann auch ein Einrasten des Bildwandgehäuses 4 an den Wand-Deckenträgern 1a vorgesehen sein. Grundsätzlich bleibt es dem Installateur überlassen, mit wie vielen abwechselnden Anhebe-Schritten er das Bildwandgehäuse 4 in seine vorgesehene Montageposition bringt.

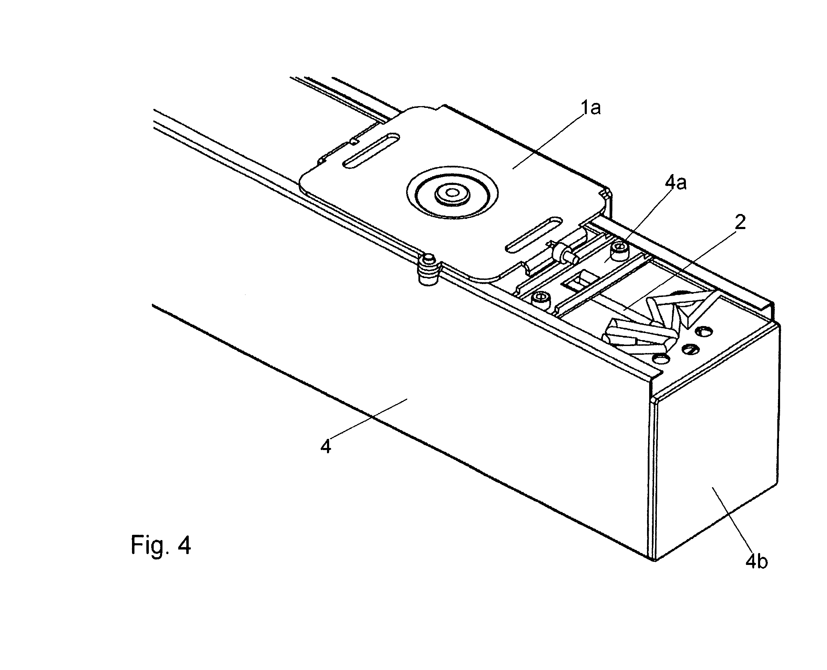

Nach dem Befestigen des Bildwandgehäuses 4 an den Wand-Deckenträgern 1a kann das Seil 2 entweder durch Lösen oder Abschneiden wieder entfernt werden oder das Seil 2 wird, wie in Figur 4 dargestellt, auf dem Bildwandgehäuse 4 verstaut. Insbesondere für den Fall, dass das Bildwandgehäuse 4 ausgetauscht werden muss, ist es durchaus vorteilhaft, das Seil 2 vor Ort zu belassen. In diesem Fall kann das zu reparierende oder zu ersetzenden Bildwandgehäuse 4 an den Seilen 2 analog dem Anheben langsam wechselseitig herabgelassen werden, bis der Monteur es abnehmen kann oder der Boden erreicht ist. Zu diesem Zweck können auch die Haltevorrichtungen 3 am Bildwandgehäuse 4 unter einer Abdeckkappe 4b verbleiben. Das neue oder reparierte Bildwandgehäuse 4 kann wiederum an den Seilen 2 angehoben werden, so dass die flexiblen Zugsysteme 2, 3 schnell einen Mehrfachnutzen entfalten.

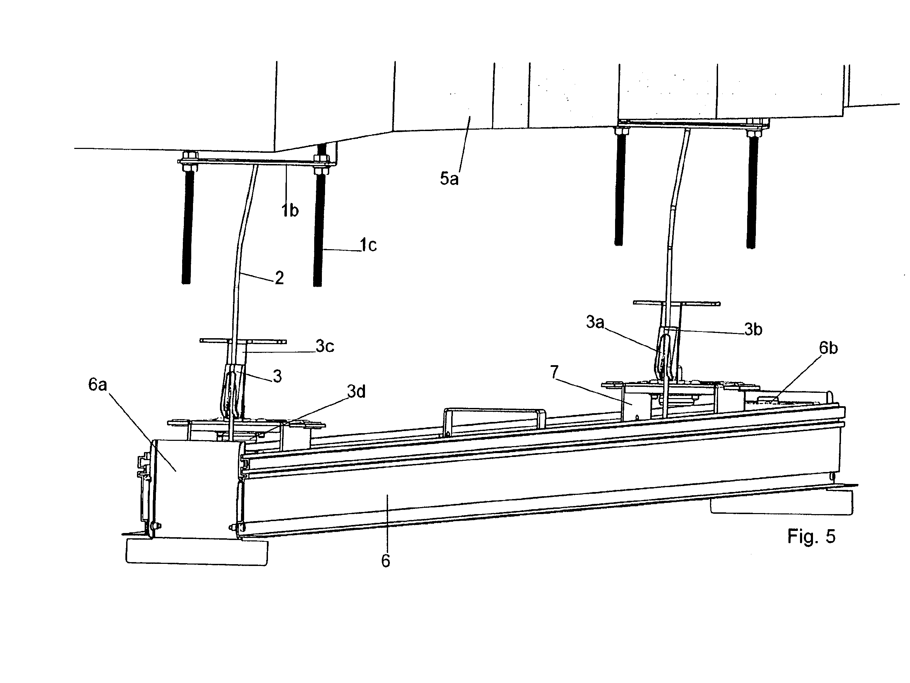

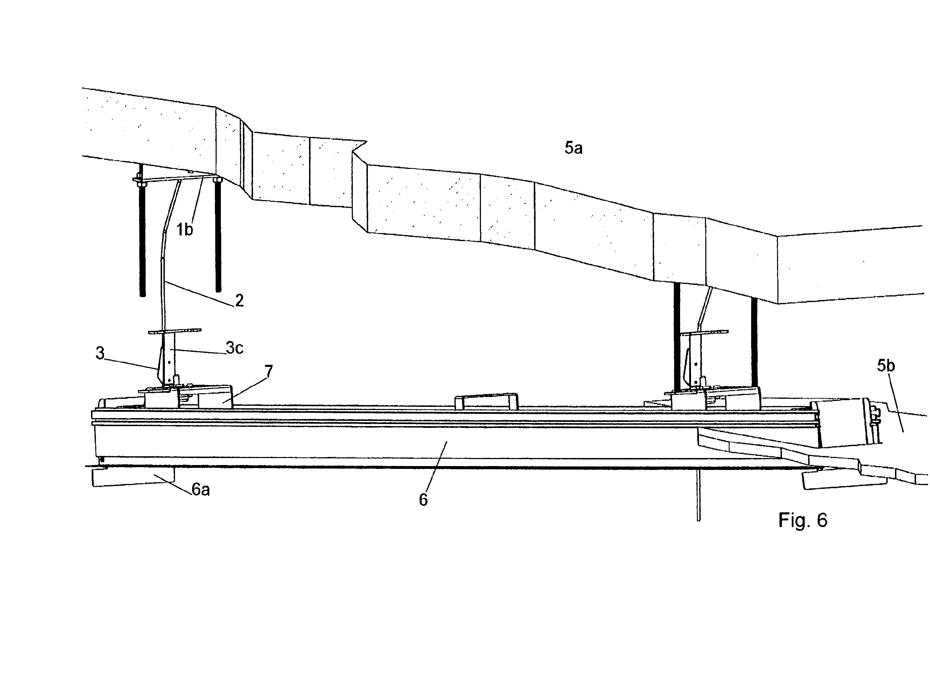

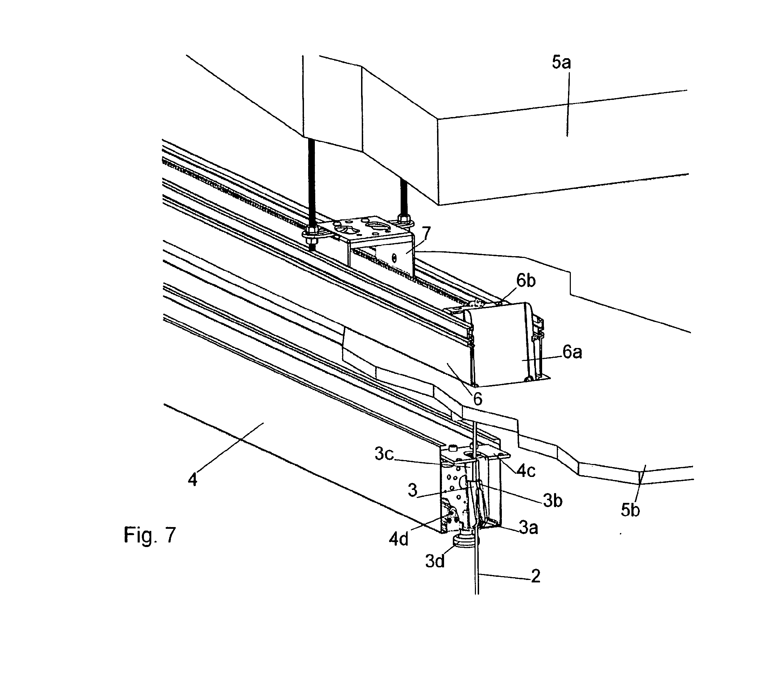

In Figur 5 ist ein flexibles Zugsystem 2, 3 nach einer zweiten Ausführungsform der Erfindung dargestellt. Bei der zweiten Ausführungsform wird ein vorzugsweise mit Montageelementen 7 ausgestatteter Deckeneinbaurahmen 6 anstelle eines Bildwandgehäuses 4 an den Seilen 2 angehoben. Bei der zweiten Ausführungsform werden in der Regel reine Deckenträger 1b verwendet, an denen Gewindestangen 1c angebracht werden und an die wiederum die auf dem Deckeneinbaurahmen 6 befestigten Montageelemente 7 angeschraubt werden. Da die zweite Ausführungsform vor allem für die Montage eines Bildwandsystems in abgehängte Decken 5b (Darstellung in Figur 6) vorgesehen ist, sind die Gewindestangen 1c oft etwas länger, so dass die Montagebügel 3c der Haltevorrichtungen 3 auf den Montageelementen 7 mit Befestigungsmitteln 3d fixiert werden. Auch bei der zweiten Ausführungsform können die Bestandteile des flexiblen Zugsystems 2, 3, also das Seil 2 und die Haltevorrichtung 3, am Bildwandsystem belassen werden. Insbesondere können die flexiblen Tragmittel 2 auch für die Anwendung der dritten Ausführungsform der Erfindung weiterverwendet werden. In diesem Fall werden die flexiblen Tragmittel 2, wie zum Beispiel die Seile, von den Montagebügeln zu den Bildwandmontagebügeln 6b (in den Figuren 7 bis 9 genauer dargestellt) des Deckeneinbaurahmens 6 geführt und dort gegebenenfalls nochmals fixiert. In Figur 5 sind die Bildwandmontagebügel 6b teilweise durch die Revisionsklappen 6a verdeckt.

Figur 6 zeigt exemplarisch, dass auch im Falle der zweiten Ausführungsform der Erfindung ein abwechselndes Anheben an den Seiten des Deckeneinbaurahmens 6 an den Seilen 2 vorgesehen ist, wobei der Deckeneinbaurahmen 6 an die Stelle des Bildwandgehäuses 4 tritt.

In Figur 7 ist das flexible Zugsystem 2, 3 nach einer dritten Ausführungsform der Erfindung dargestellt. Die dritte Ausführungsform kann im Anschluss an die Anwendung der zweiten Ausführungsform der Erfindung zum Einsatz kommen. Darüber hinaus besteht eine Analogie zur ersten Ausführungsform der Erfindung, nur dass die Seile als flexible Tragmittel nicht an Wand-Deckenträgern 1a (siehe u.a. Figur 1), sondern vorzugsweise an den Bildwandmontagebügeln 6b des Deckeneinbaurahmens 6 befestigt sind. Die Bildwandmontagebügel 6b befinden sich bevorzugt jeweils in der Nähe der beiden Seitenenden des Deckeneinbaurahmens 6. Für die Anwendung der dritten Ausführungsform ist das Bildwandgehäuse 4 vorzugsweise mit Bildwandmontageplatten 4c an den beiden seitlichen Enden ausgestattet. Im Gegensatz zur ersten Ausführungsform wird die dritte Ausführungsform der Erfindung bei abgehängten Decken 5b eingesetzt, wobei die gesamte Konstruktion des Bildwandsystems in die abgehängte Decke 5b eingebaut und an der Rohdecke 5a befestigt wird. Die Revisionsklappen 6a des Deckeneinbaurahmens 6 werden nach beendeter Montage des Bildwandgehäuses 4 heruntergeklappt, d.h. um 90° geschwenkt und bilden dann einen flächigen Abschluss in der abgehängten Decke 5b mit der Unterseite des Bildwandgehäuses 4. Die Haltevorrichtung 3 ist zu den Haltevorrichtungen 3 der zweiten und der ersten Ausführungsform vorzugsweise identisch, so dass nur ein einziger Typ von Haltevorrichtungen 3 hergestellt werden muss. Der einheitliche Aufbau der Haltevorrichtung 3 ist besonders für Nachrüstsätze interessant, da in diesem Fall keine getrennte Logistik erforderlich ist und der Kunde keine ähnlichen Produkte verwechseln kann. Grundsätzlich soll nämlich nur ein einheitliches flexibles Zugsystem als Zubehör ausgeliefert werden, der für alle zuvor beschriebenen Ausführungsformen der Erfindung verwendet werden kann.

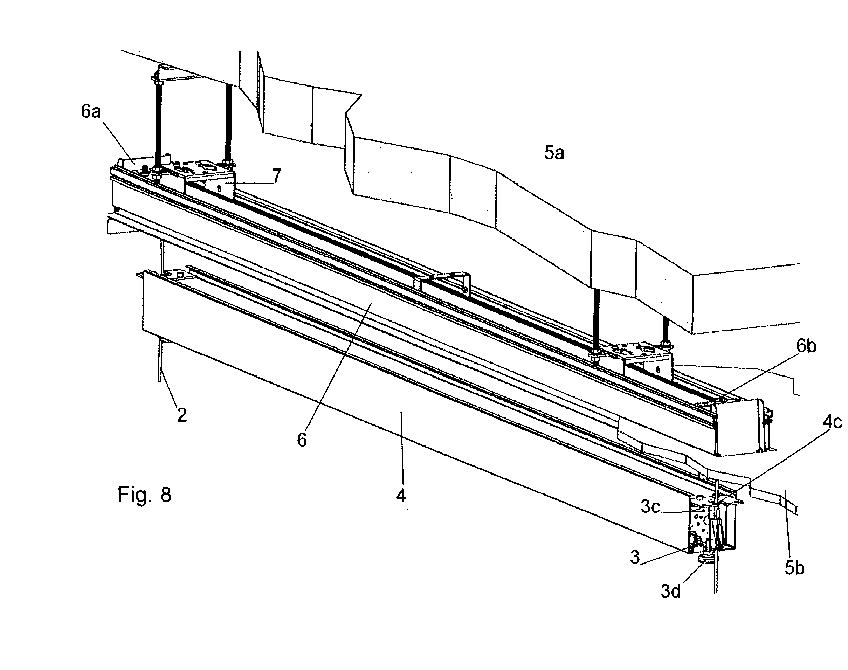

Figur 8 zeigt wie Figur 7 die dritte Ausführungsform der Erfindung, nur dass in Figur 8 der gesamte Deckeneinbaurahmen 6 und das gesamte Bildwandgehäuse 4 zu erkennen sind. Alle weiteren Details entsprechen der Figur 7.

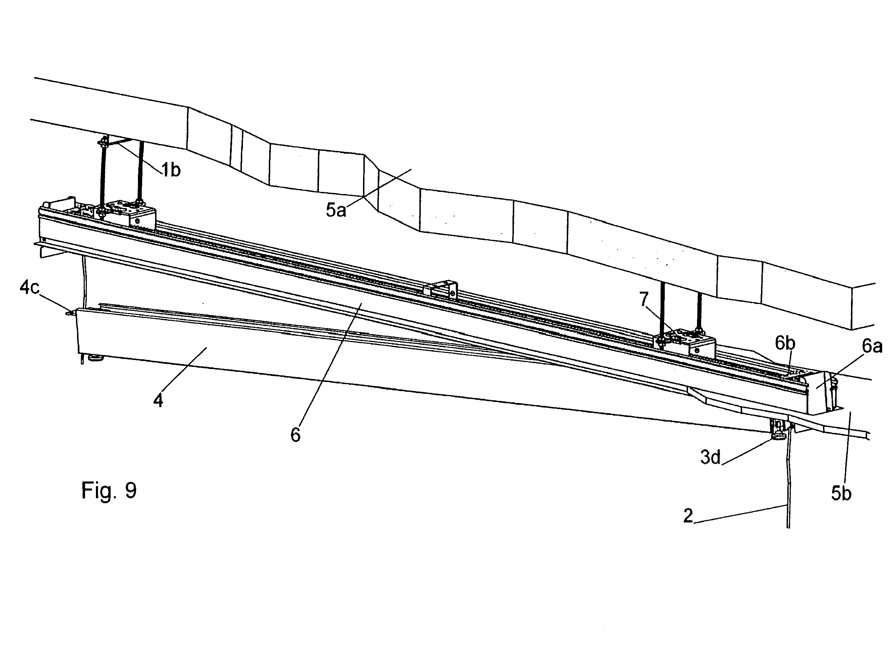

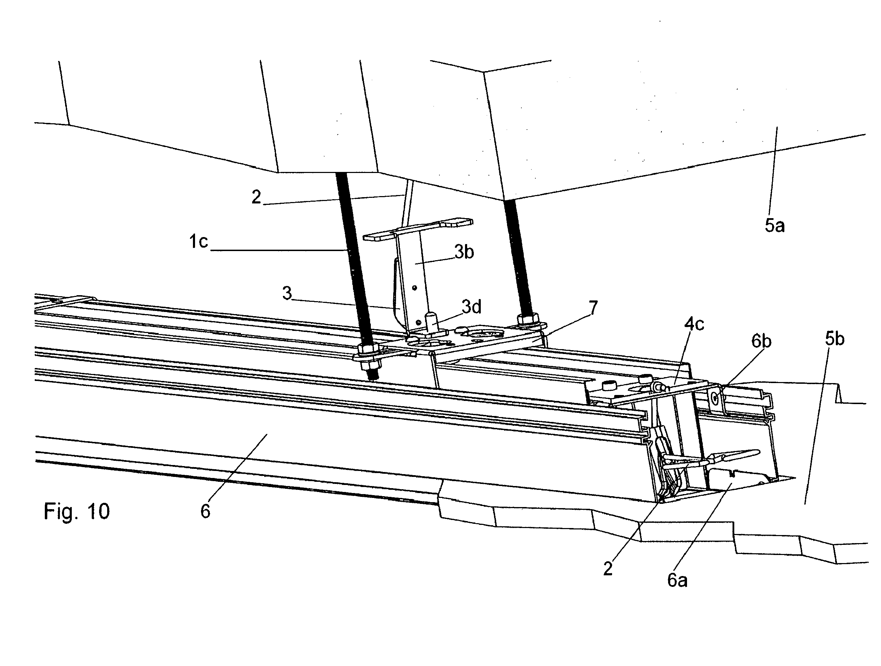

Anhand der Figur 9 ist zu erkennen, dass das Bildwandgehäuse 4 bis in den Deckeneinbaurahmen 6 hinein abwechselnd an den Enden angehoben wird, wobei die linke Seite noch etwa einmal angehoben werden muss, um die endgültige Montageposition des Bildwandgehäuses 4 zu erreichen. Auf der rechten Seite des Bildwandgehäuses 4 bzw. des Deckeneinbaurahmens 6 kann die Bildmontageplatte 4c auf den Bildwandmontagebügel 6b gelegt werden, wodurch das Bildwandgehäuse 4 und der Deckeneinbaurahmen 6 miteinander verhakt werden. Vorzugsweise durch Verschrauben wird die Verbindung zwischen der Bildwandmontageplatte 4c und dem Bildwandmontagebügel 6b fixiert. Die Verbindung zwischen Bildmontageplatte 4c und Bildwandmontagebügel 6b ist in Figur 10 veranschaulicht.

Figur 10 zeigt das vollständig installierte Bildwandsystem, d.h. sowohl der Deckeneinbaurahmen als auch das Bildwandgehäuse sind in der abgehängten Decke montiert. Die Abbildung zeigt damit das Endstadium, nachdem nacheinander die zweite und die dritte Ausführungsform der Erfindung zum Einsatz gekommen sind. In Figur 10 wird auch illustriert, dass die Haltevorrichtungen 3 am Deckeneinbaurahmen 6 und am Bildwandgehäuse 4 bei einem nachfolgenden Montageschritt des Bildwandsystems verbleiben können. Die flexiblen Tragmittel 2 können ebenfalls am Deckeneinbaurahmen 6 bzw. Bildwandgehäuse 4 verbleiben und gegebenenfalls sogar mehrmals für die verschiedenen Ausführungsformen verwendet werden, was in der Figur 10 allerdings nicht dargestellt ist.

Grundsätzlich kann das dargestellte Seilzugsystem aller dargestellten Ausführungsformen und auch andere Ausführungsformen des flexiblen Zugsystems statt eines einfachen Zuges auch jeweils einen Flaschenzug aufweisen.

## Patentansprüche

1. Flexibles Zugsystem (2, 3) für Bildwandsysteme, eine Haltevorrichtung (3) mit einem Haltemittel (3a) und ein flexibles Tragmittel (2) umfassend,
**dadurch gekennzeichnet,**
**dass** die Haltevorrichtung (3) mindestens einen Montagepunkt für die Montage an mindestens einem Bestandteil eines Bildwandsystems, insbesondere an einem Montageelement (7) oder Deckeneinbaurahmen (6) oder Bildwandgehäuse (4), aufweist.

2. Flexibles Zugsystem nach Anspruch 1,
**dadurch gekennzeichnet,**
**dass** die Haltevorrichtung (3) des flexiblen Zugsystems (2, 3) als Haltemittel eine Klemme (3a) oder Öse und vorzugsweise eine Führung (3b) aufweist und dass die Haltevorrichtung (3) an einem Bestandteil eines Bildwandsystems, also an einem Montageelement (7), an einem Deckeneinbaurahmen (6) oder an einem Bildwandgehäuse (4) angeordnet ist.

3. Flexibles Zugsystem nach Anspruch 1 oder 2,
**dadurch gekennzeichnet,**
**dass** das flexible Zugsystem (2, 3) als Seil, Riemen- oder Kettenzugsystem ausgeführt ist, welches als flexibles Tragmittel (2) ein Seil, einen Riemen oder eine Kette, insbesondere eine Kugelkette oder eine Ringkette aufweist.

4. Flexibles Zugsystem nach einem der vorangehenden Ansprüche,
**dadurch gekennzeichnet,**
**dass** das flexible Zugsystem (2, 3) einen Flaschenzug und/ oder einen Antriebsmotor aufweist.

5. Verfahren zur Montage von Bildwandsystemen mit Hilfe von zwei flexiblen Zugsystemen (2, 3) mit den folgenden Schritten:
A. flexible Tragmittel (2), insbesondere Seile (2), Riemen oder Ketten, werden für die rechte und linke Seite jeweils am Wand-Deckenträger (1a) oder am Deckenträger (1b) oder an einem Bildwandmontagebügel (6b) befestigt,
B. Haltevorrichtungen (3) werden jeweils rechts und links an einem Deckeneinbaurahmen (6) oder einem Bildwandgehäuse (4) befestigt, wobei die Befestigung an einem Deckeneinbaurahmen (6) auch an Montageelementen, die auf dem Deckeneinbaurahmen (6) aufgesetzt sind, erfolgen kann,
C. der Deckeneinbaurahmen (6) bzw. das Bildwandgehäuse (4) werden rechts und links wechselseitig oder gegebenenfalls auch gleichzeitig an den flexiblen Tragmitteln (2) abhängig von der Höhe und der Größe des Monteurs hochgezogen bzw. geschoben und anschließend an den Haltevorrichtungen (3) arretiert,
D. der Schritt C. wird so lange wiederholt, bis der Deckeneinbaurahmen (6) bzw. das Bildwandgehäuse (4) in seine endgültige Montageposition gelangt ist.

6. Verfahren nach Anspruch 4,
**dadurch gekennzeichnet,**
**dass** einer oder mehrere der folgenden weiteren Schritte vorgesehen ist bzw. sind:
E. zwischen den Schritten B. und C.: die flexiblen Tragmittel (2), insbesondere die Seile (2) oder die Ketten, werden rechts bzw. links durch die Führungen (3b) der Haltevorrichtungen (3) gezogen,
F. nach Schritt D.: Einrasten des Deckeneinbaurahmens (6) bzw. des Bildwandgehäuses (4) an Haltevorrichtungen des Wand-Deckenträgers (1a) bzw. des Bildwandgehäuses (4),
G. Befestigen des Deckeneinbaurahmens (6) bzw. des Bildwandgehäuses (4),
H. Aufnehmen der flexiblen Tragmittel (2) und Unterbringen der flexiblen Tragmittel (2) oberhalb oder seitlich rechts und links des Deckeneinbaurahmens (6) oder des Bildwandgehäuses (4).

7. Verfahren nach Anspruch 4 oder 5,
**dadurch gekennzeichnet,**
**dass** die Haltevorrichtungen (3) jeweils Klemmen (3a) oder Ösen, eine Führung (3b) und mindestens einen Montagepunkt für die Montage an mindestens einem Bestandteil eines Bildwandsystems aufweisen.
